# EUROPEAN PATENT APPLICATION

(11) **EP 4 582 852 A1**
(43) Date of publication of application: **09.07.2025**
(21) Application number: 23890581.4
(22) Date of filing: 31.10.2023
(51) Int. Cl.: G02B 27/01, G02B 3/00

(54) **LENS ARRAY AND ELECTRONIC DEVICE**

(30) Priority: 16.11.2022 CN 202211435617
(71) Applicant: Huawei Technologies Co., Ltd., Shenzhen, Guangdong 518129 (CN)
(72) Inventor: SHI, Jia, Shenzhen, Guangdong 518129 (CN)
(74) Representative: Grünecker Patent- und Rechtsanwälte PartG mbB
(86) International application number: PCT/CN2023/128497
(87) International publication number: WO 2024/104145

(57) **Abstract**

This application relates to a lens array and an electronic device. The lens array is used in the electronic device. The electronic device includes a display and an optical component. The display includes a display surface, configured to display an image. The lens array is disposed on a side of the display surface of the display, the lens array includes a plurality of lenses, and there is a gap between any two adjacent lenses. The optical component is disposed on a side that is of the lens array and that is away from the display, and the optical component is configured to change a propagation path of a light ray incident through the lens array, so that the light ray is capable of being emitted into a human eye. The plurality of lenses in the lens array are specifically arranged, and a spacing between two adjacent lenses is adjusted, so that there is the gap between any two adjacent lenses. This can ensure that field-of-view areas covered by the lenses on the display surface are independent of each other and do not overlap.

## Description

### TECHNICAL FIELD

This application relates to the field of optical technologies, and in particular, to a lens array and an electronic device.

### BACKGROUND

A near-eye display apparatus is usually constructed as a head-mounted display apparatus, and is configured to directly project an image or information into a human eye. The near-eye display apparatus synthesizes a virtual magnified image. This resolves a problem that a naked human eye cannot focus on an object that is very close to the eye. In addition, a limitation of a display size of the head-mounted display apparatus can be relieved, to provide more immersive experience. Generally, a head-mounted display device used based on augmented reality and virtual reality (Augmented Reality and Virtual Reality, AR&VR) on the market usually uses a foldable optical path (Pancake) solution and a Fresnel solution to reduce an overall size. In the foregoing near-eye display apparatus, a diameter of a lens is directly determined by a designed field of view and an optical exit pupil, and the diameter of the lens affects a focal length of the lens. As a result, the focal length of the lens cannot be reduced unlimitedly. Correspondingly, a spacing between a display and the lens cannot be further reduced. This is a main reason for a large size of current near-eye display equipment.

In a conventional technology, the focal length of the lens is further reduced by using a microlens array, to reduce the spacing between the display and the lens, and reduce the overall size of the near-eye display apparatus. However, the microlens array is prone to causing field-of-view crosstalk.

### SUMMARY

This application provides a lens array and an electronic device, to improve a field-of-view crosstalk problem of a near-eye display apparatus.

According to a first aspect of embodiments of this application, a lens array is provided, which is used in an electronic device. The electronic device includes a display and an optical component. The display includes a display surface, configured to display an image. The lens array is disposed on a side of the display surface of the display, the lens array includes a plurality of lenses, and there is a gap between any two adjacent lenses. The optical component is disposed on a side that is of the lens array and that is away from the display, and the optical component is configured to change a propagation path of a light ray incident through the lens array, so that the light ray is capable of being emitted into a human eye.

The plurality of lenses in the lens array are specifically arranged, and a spacing between two adjacent lenses is adjusted in consideration of a range of a field-of-view area that can be viewed by the human eye through the optical component and the lens after the human eye moves, so that there is the gap between any two adjacent lenses, and a distance between field-of-view areas covered by the two adjacent lenses on the display surface is increased, it can be ensured that field-of-view areas covered by the lenses on the display surface are independent of each other and do not overlap, and field-of-view crosstalk is avoided during viewing of a user. In addition, it can be ensured that the human eye moves in a specific range of the human-eye plane, and in a process in which an optical path that is of a light ray emitted from the display surface and that passes through the lens array and the optical component changes, the field-of-view areas covered by the lenses on the display surface are still independent of each other, so that a picture in each field-of-view area on the display surface can be received by the human eye in a corresponding field of view through a corresponding lens, it is ensured that the human eye can receive all continuous and non-overlapping field-of-view areas, displayed picture content are clearly viewed, a field-of-view crosstalk problem is avoided, and an eye box range of the electronic device is expanded. Therefore, a fault tolerance rate of wearing the electronic device is improved, the electronic device is applicable to a wider range of people, and user experience effect is improved.

In a possible design, the lens array further includes a shielding part, and the shielding part is disposed in the gap, to prevent a light ray emitted from the display surface from passing through the gap.

In this design, the shielding part is disposed in the gap between the two adjacent lenses in the lens array, so that the light ray emitted from the display surface can be prevented from being emitted into the human eye through the optical component through the gap between the two adjacent lenses and interfering with imaging effect. Therefore, imaging definition of the electronic device is improved, and viewing experience of the human eye is improved.

In a possible design, there are at least two different lens spacings between the plurality of lenses.

In this design, there are at least two different spacings between the lenses, so that it can be ensured that the field-of-view areas covered by the lenses on the display surface do not overlap, pixel utilization on the display surface is improved, and a loss of the field of view is avoided. In addition, a distance between an optical axis of the lens in the lens array and an optical axis of a lens adjacent to the lens can be prevented from being excessively large, which causes an increase in the size of the lens array. This facilitates a miniaturization design of the electronic device. Moreover, the distance between the optical axis of the lens in the lens array and the optical axis of the lens adjacent to the lens can also be prevented from being excessively small, so that light rays in an optical path can be prevented from interfering with each other, the light rays in the optical path are distributed more evenly, and imaging definition is improved.

In a possible design, diameters of the lenses gradually decrease in a direction from a center position of the lens array to an edge.

In this design, in the lens array, for pictures in different field-of-view areas, lenses with different diameters are used to perform imaging. To be specific, a diameter of the lens at the edge of the lens array is small, and a diameter of the lens at the center position of the lens array is large. This helps implement a smaller radius of curvature of the lens at the edge of the lens array, to obtain larger focal power and improve imaging definition and viewing experience of the user.

In a possible design, the lens has an optical axis, and distances between an optical axis of each of at least two lenses and optical axes of lenses adjacent to the lens are different.

In this design, when there are at least two lenses with different diameters in the lens array, diameters of two lenses on two adjacent sides of the lens are different, and distances between an optical axis of the lens and optical axes of the two adjacent lenses may be different, to ensure that light rays in an optical path are distributed evenly, and sizes of some gaps in the lens array can be reduced. Therefore, a quantity of lenses in the lens array is ensured, and a size of the lens array is reduced. This facilitates a miniaturization design of the electronic device, and helps improve transmission efficiency of the lens array.

In a possible design, in the plurality of lenses, at least two lenses have different radii of curvature.

In this design, the lens array can perform imaging for pictures in different field-of-view areas by using lenses with different focal lengths and different radii of curvature, so that light ray transmission effect of the lens array can be improved, definition of a picture viewed by the human eye can be improved, the electronic device has better imaging quality, and user experience effect is improved.

In a possible design, the plurality of lenses are arranged in a centrosymmetric arrangement manner.

In this design, the lens array is of a centrosymmetric structure. This can simplify an analysis process of the lens array, reduce manufacturing difficulty, and reduce production and manufacturing costs. In addition, in consideration of a structure of the human eye, a range of the field-of-view area covered by the lens on the display surface better matches a field of view of the human eye. Therefore, user experience effect is improved.

In a possible design, the optical component is of one of a foldable optical path structure, a diffractive element structure, a Fresnel lens structure, and an aspherical lens structure.

In this design, when the optical component is of one of the foldable optical path structure, the diffractive element structure, the Fresnel lens structure, and the aspherical lens structure, the optical component has good focusing and light convergence effect. Therefore, after a light ray emitted from the lens array enters the optical component, an optical path of the light ray can be changed, and the light ray in the optical path can be converted into approximately parallel light to be incident to the human eye, so that a corresponding image can be formed in the human eye and viewed by the human eye. In this way, imaging definition is improved, an imaging focal length of the electronic device is shortened, so that the electronic device can be lighter and thinner, costs are reduced, and a miniaturization design of the electronic device is facilitated.

In a possible design, the lens is a spherical lens and/or an aspherical lens.

In this design, spherical lenses with different diameters, focal lengths, and radii of curvature or a combination of aspherical lenses is used to perform imaging for pictures in different field-of-view areas according to an actual requirement, to improve picture definition, improve strength of the lens array, and reduce costs.

In a possible design, a diameter range of the lens is [0.1 mm, 10 mm]. A range of a lens spacing between any two adjacent lenses is [0.1 mm, 10 mm]. A focal length range of the lens is [1 mm, 1000 mm]. A range of a radius of curvature of the lens is [1 mm, 1000 mm].

In this design, the lens array may use lenses that have different diameters, focal lengths, and radii of curvature and that meet the foregoing ranges, and the spacing between two adjacent lenses of the lens array are adjusted, to ensure that field-of-view areas covered by the lenses on the display surface are independent of each other and do not overlap, so that the electronic device can implement more eye box ranges and meet different use requirements.

According to a second aspect of embodiments of this application, an electronic device is provided, including a display, an optical component, and the lens array described in any one of the foregoing embodiments. The lens array is disposed between the display and the optical component. Because the lens array has the foregoing technical effect, the electronic device including the lens array should also have corresponding technical effect. Details are not described herein again.

It should be understood that the foregoing general descriptions and the following detailed descriptions are merely used as an example, and cannot limit this application.

### BRIEF DESCRIPTION OF DRAWINGS

FIG. 1 is a diagram of a structure of an electronic device in a conventional technology;
FIG. 2 is a diagram of another structure of an electronic device in a conventional technology;
FIG. 3 is a diagram of a change of a field-of-view area of a third lens in FIG. 1 in a human eye movement process;
FIG. 4 is a diagram of a relationship between a field-of-view area of each lens in a closely-packed lens array of the electronic device in FIG. 1 and a human eye offset;
FIG. 5 is a diagram of a relationship between a field-of-view area of each lens in a closely-packed lens array of the electronic device in FIG. 2 and a human eye offset;
FIG. 6 is a diagram of a structure of an electronic device according to an embodiment of this application;
FIG. 7a is a diagram of a structure of another electronic device according to an embodiment of this application;
FIG. 7b is a front view of a lens array in FIG. 7a;
FIG. 8 shows imaging that is on a display of the electronic device in FIG. 6 and that is implemented when an offset of a human eye on a human-eye plane is 0 mm;
FIG. 9 shows imaging that is on a display of the electronic device in FIG. 6 and that is implemented when an offset of a human eye on a human-eye plane is -2 mm;
FIG. 10 shows imaging that is on a display of the electronic device in FIG. 6 and that is implemented when an offset of a human eye on a human-eye plane is +2 mm;
FIG. 11 shows imaging on a display of the electronic device in FIG. 6 within a movement range of [-2 mm, 2 mm] of a human eye on a human-eye plane;
FIG. 12 shows imaging that is on a display of the electronic device in FIG. 7a and that is implemented when an offset of a human eye on a human-eye plane is 0 mm;
FIG. 13 shows imaging that is on a display of the electronic device in FIG. 7a and that is implemented when an offset of a human eye on a human-eye plane is -2 mm;
FIG. 14 shows imaging that is on a display of the electronic device in FIG. 7a and that is implemented when an offset of a human eye on a human-eye plane is +2 mm;
FIG. 15 shows imaging on a display of the electronic device in FIG. 7a within a movement range of [-2 mm, 2 mm] of a human eye on a human-eye plane;
FIG. 16 is a diagram of a partial structure of a lens array in FIG. 6; and
FIG. 17 is a diagram of a partial structure of a lens array in FIG. 7a.

### Reference numerals:

1': display;
   11': display surface;
2': closely-packed lens array;
   211': first lens;
   212': second lens;
   213': third lens;
   214': fourth lens;
3': optical component;
4': human-eye plane;
5': human eye;
6': optical path;
7': field-of-view area;
8': overlapping field-of-view area;
1: display;
   11: display surface;
2: lens array;
   21: lens;
      211: first lens;
      212: second lens;
      213: third lens;
      214: fourth lens;
      215: optical axis;
   22: gap;
   23: shielding part;
3: optical component;
4: human-eye plane;
5: human eye;
6: optical path;
7: field-of-view area.

The accompanying drawings herein are incorporated into this specification and constitute a part of this specification, show embodiments in accordance with this application, and are used together with this specification to explain the principle of this application.

### DESCRIPTION OF EMBODIMENTS

To better understand technical solutions of this application, the following describes embodiments of this application in detail with reference to the accompanying drawings.

In a specific embodiment, the following further describes this application in detail with reference to specific embodiments and the accompanying drawings.

Before embodiments of this application are described, related concepts and related technologies are first described.

A lens array is formed by a plurality of lenses arranged in a specific order, and a quantity of lenses ranges from a few to tens of thousands. Each lens has a unique optical axis. In comparison with a conventional single lens, a lens array has extremely high parallelism, and each lens may transmit an optical signal independently of each other. This is equivalent to that there are a large quantity of parallel optical paths, and each lens has functions such as transmitting optical information and transforming imaging. A light ray received at the bottom of each lens indicates a minimum field of view ωNmin_Shift that can pass through the lens, a light ray that is of a pipeline and that is received at the top of each lens indicates a maximum field of view ωNmax_Shift that can pass through the lens, N indicates a specific lens, Shift indicates a relative offset between a human eye and the lens, and an area between the maximum field of view and the minimum field of view of each lens is a field-of-view area in which a picture can be viewed by the human eye through the lens.

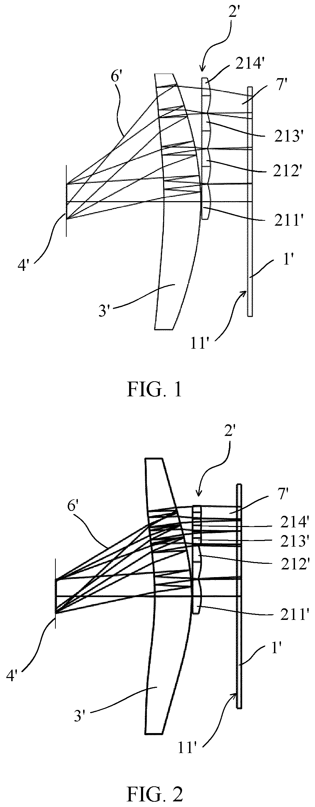

FIG. 1 to FIG. 5 are diagrams of partial structures of an existing electronic device. For a closely-packed lens array 2' arranged closely shown in FIG. 1 to FIG. 5, in a direction from a center position of the closely-packed lens array 2' to an edge of the closely-packed lens array 2', the closely-packed lens array 2' may include a plurality of lenses such as a first lens 211', a second lens 212', a third lens 213', and a fourth lens 214'. The plurality of lenses in the closely-packed lens array 2' are arranged closely in a specific order. However, because positions of optical axes of the lenses are different, field-of-view areas 7' of the lenses are prone to overlap, causing field-of-view crosstalk and affecting viewing experience of a user. In addition, an eye box range of the closely-packed lens array 2' is small. When a human eye 5' moves on a human-eye plane 4', field-of-view crosstalk is also prone to occur, and a viewing picture is affected.

An eye box range is a tapered area between an electronic device and a human eye, and clear picture content can be viewed in the area. When a pupil center of the human eye is aligned with a center of an optical module formed by components such as an optical component and a lens array, a clearest image can be viewed. The eye box range may indicate a range in which the human eye moves upward, downward, leftward, and rightward on a human-eye plane. Displayed picture content can be clearly viewed within the range. Beyond the range, a clear image cannot be viewed, and even an image display error or another problem occurs.

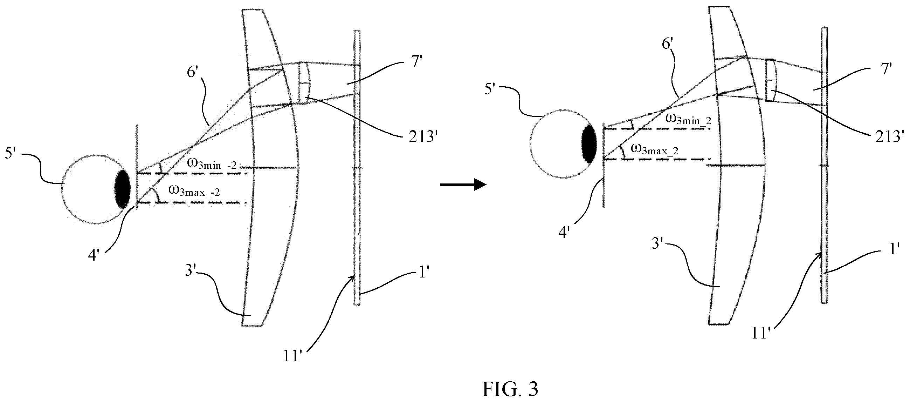

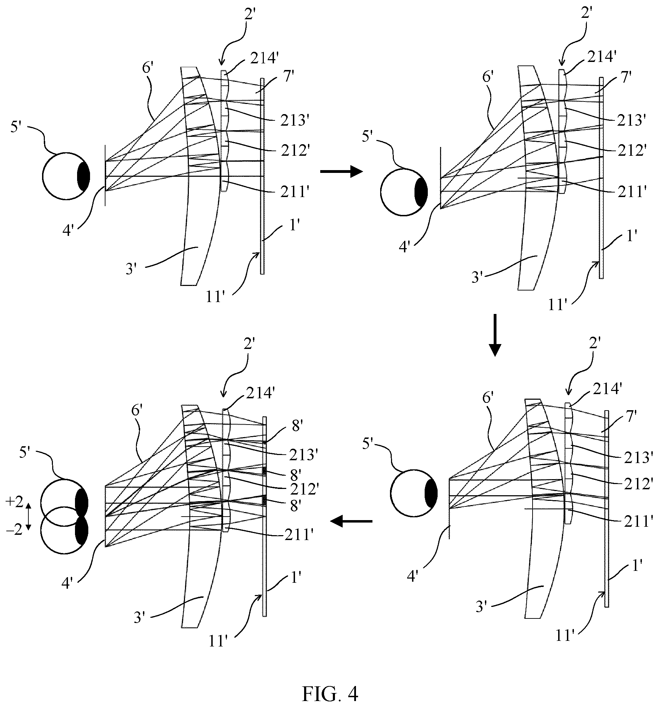

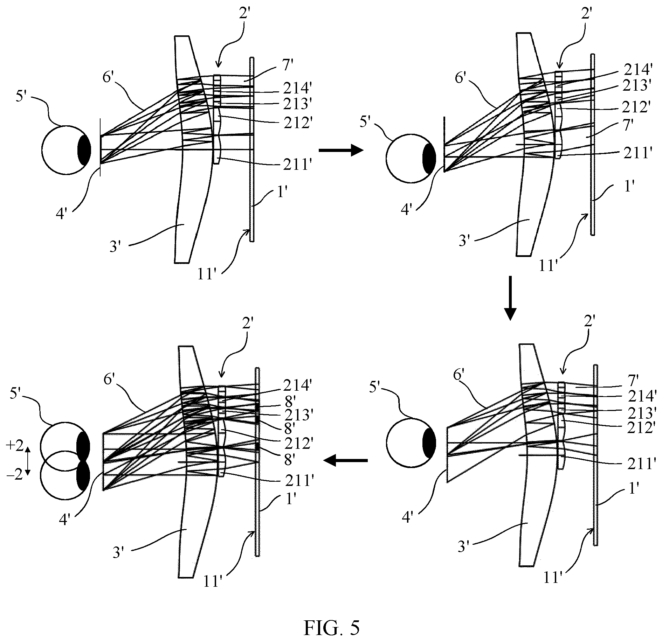

In FIG. 3, in a direction indicated by an arrow, a range of a field-of-view area covered by a third lens 213' on a display when an offset of the human eye on a human-eye plane is -2 mm and a range of a field-of-view area covered by the third lens 213' on the display when the offset of the human eye on the human-eye plane is +2 mm are shown in sequence. In FIG. 4 and FIG. 5, in a direction indicated by an arrow, imaging that is on the display and that is implemented when the offset of the human eye on the human-eye plane is 0 mm, imaging that is on the display and that is implemented when the offset of the human eye on the human-eye plane is -2 mm, imaging that is on the display and that is implemented when the offset of the human eye on the human-eye plane is +2 mm, and imaging on the display within a movement range of [-2 mm, 2 mm] of the human eye on the human-eye plane are shown in sequence.

As shown in FIG. 1 and FIG. 2, when the human eye 5' does not deviate and remains at the center position of the closely-packed lens array 2', that is, the offset is 0 mm, a light ray emitted from a display surface 11' passes through the closely-packed lens array 2' and an optical component 3' sequentially to form an optical path 6' and emit the light ray into the human eye 5'. The human eye 5' may receive light rays from different positions of the display surface 11' through the lenses. The display 1' may be divided into a plurality of field-of-view areas 7' to display different pictures, and a picture in each field-of-view area 7' on the display surface 11' can be received by the human eye 5' in a corresponding field of view through a corresponding lens, to form a picture viewed by the human eye.

When the human eye 5' deviates on the human-eye plane 4', the third lens 213' is used as an example, as shown in FIG. 3, the optical path 6' through which the light ray is emitted from the display surface 11' into the human eye 5' changes, so that positions of a maximum field of view and a minimum field of view that pass through the third lens 213' change, where ω_{3min_-2} > ω_{3min_2}, and ω_{3max_-2} > ω_{3max_2}. In other words, a position and the range of the field-of-view area 7' covered by the third lens 213' on the display surface 11' change. Similarly, as the human eye 5' moves on the human-eye plane 4', field-of-view areas 7' covered by other lenses in the closely-packed lens array 2' on the display 1' also change. Consequently, field-of-view areas 7' covered by adjacent lenses is prone to overlap, and a plurality of overlapping field-of-view areas 8' shown in FIG. 4 and FIG. 5 are formed. However, because fields of view corresponding to each lens and a lens adjacent to the lens are different, a picture displayed in the overlapping field-of-view areas 8' may be received and viewed by the human eye in at least two fields of view. As a result, a field-of-view crosstalk phenomenon occurs in a picture viewed by the human eye, the picture cannot be correctly displayed, and human eye viewing effect is severely affected.

To resolve the technical problem, embodiments of this application provide an electronic device. The electronic device includes a head-mounted display device such as an AR&VR. This is not limited herein. The following further describes embodiments of this application in detail by using an example in which the electronic device is a head-mounted display device and specific embodiments with reference to the accompanying drawings.

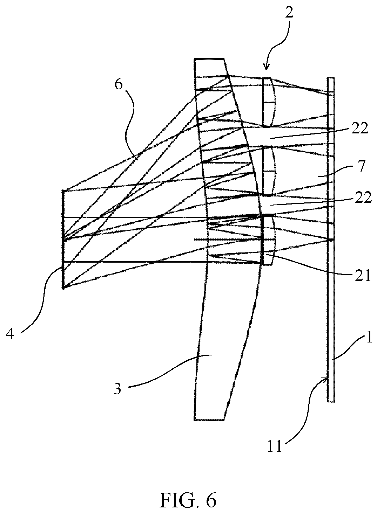

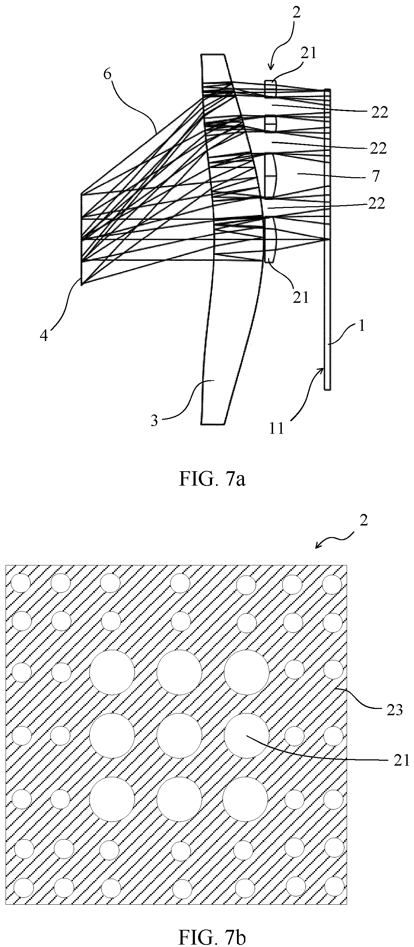

An embodiment of this application provides a lens array 2, which is used in an electronic device. As shown in FIG. 6 and FIG. 7a, the electronic device further includes a display 1 and an optical component 3. The display 1 includes a display surface 11, configured to display an image. The lens array 2 is disposed on a side of the display surface 11 of the display 1, the lens array 2 includes a plurality of lenses 21, and there is a gap 22 between any two adjacent lenses 21. The optical component 3 is disposed on a side that is of the lens array 2 and that is away from the display 1, and the optical component 3 is configured to change a propagation path of a light ray incident through the lens array 2, so that the light ray is capable of being emitted into a human eye 5.

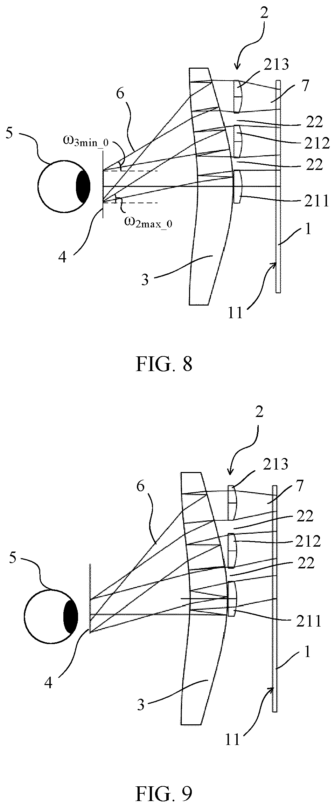

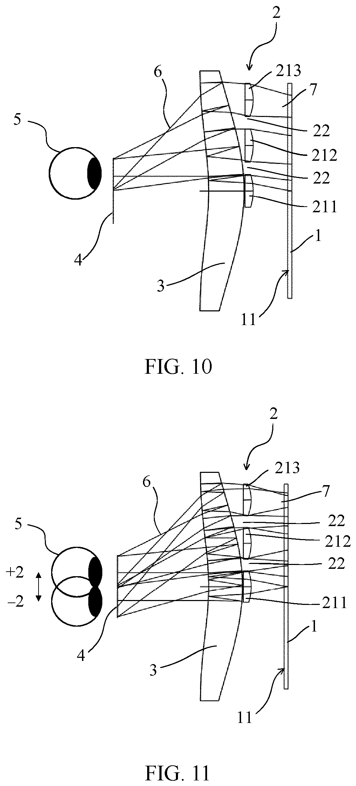

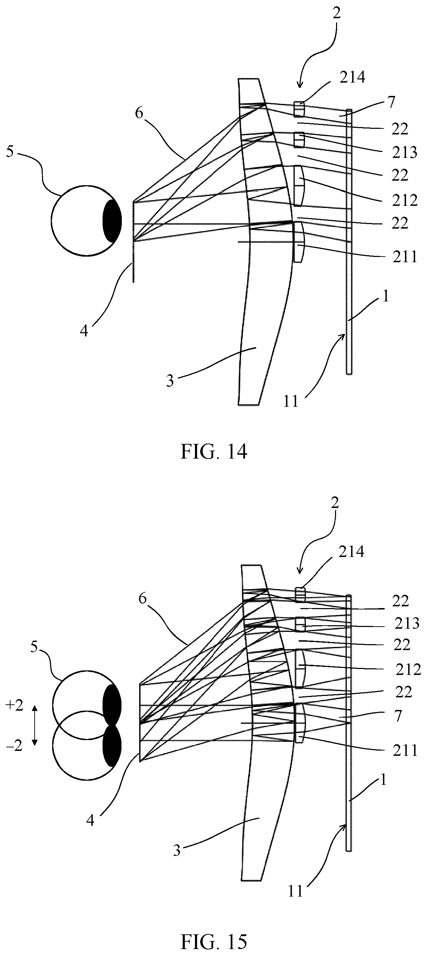

In this embodiment, as shown in FIG. 6 and FIG. 7a, the plurality of lenses 21 in the lens array 2 are specifically arranged, and a spacing between two adjacent lenses 21 is adjusted in consideration of a range of a field-of-view area 7 that can be viewed by the human eye through the optical component 3 and the lens 21 after the human eye moves, so that there is the gap 22 between any two adjacent lenses 21, and a distance between field-of-view areas 7 covered by the two adjacent lenses 21 on the display surface 11 is increased, it can be ensured that field-of-view areas 7 covered by the lenses 21 on the display surface 11 are independent of each other and do not overlap, and field-of-view crosstalk is avoided during viewing of a user. In addition, as shown in FIG. 8 to FIG. 15, it can be ensured that the human eye 5 moves within a specific range of the human-eye plane 4, and in a process in which an optical path that is of a light ray emitted from the display surface 11 and that passes through the lens array 2 and the optical component 3 changes, the field-of-view areas 7 covered by the lenses 21 on the display surface 11 are still independent of each other, so that a picture in each field-of-view area 7 on the display surface 11 can be received by the human eye 5 in a corresponding field of view through a corresponding lens 21, it is ensured that the human eye 5 can receive all continuous and non-overlapping field-of-view areas 7, displayed picture content are clearly viewed, a field-of-view crosstalk problem is avoided, and an eye box range of the electronic device is expanded. Therefore, a fault tolerance rate of wearing the electronic device is improved, the electronic device is applicable to a wider range of people, and user experience effect is improved.

That the human eye 5 moves within a specific range of the human-eye plane 4 is considered, and the spacing between the two adjacent lenses 21 should be greater than or equal to a length of an overlapping field-of-view area within the movement range when the two adjacent lenses 21 are closely connected.

It should be noted that, as shown in FIG. 8 to FIG. 15, the plurality of lenses 21 in this application may include but is not limited to a plurality of lenses such as a first lens 211, a second lens 212, a third lens 213, and a fourth lens 214 in a direction from a center position of the lens array 2 to an edge of the lens array 2. A lens at another position is omitted in FIG. 8 to FIG. 15. Actually, the first lens 211 is a lens at the center position of the lens array 2.

In a specific embodiment, as shown in FIG. 6, FIG. 7a, and FIG. 7b, the lens array 2 further includes a shielding part 23, and the shielding part 23 is disposed in the gap 22, to prevent a light ray emitted from the display surface 11 from passing through the gap 22.

In this embodiment, as shown in FIG. 6 and FIG. 7b, the shielding part 23 is disposed in the gap 22 between the two adjacent lenses 21 in the lens array 2, so that the light ray emitted from the display surface 11 can be prevented from being emitted into the human eye through the optical component 3 through the gap 22 between the two adjacent lenses 21 and interfering with imaging effect. Therefore, imaging definition of the electronic device is improved, and viewing experience of the human eye is improved.

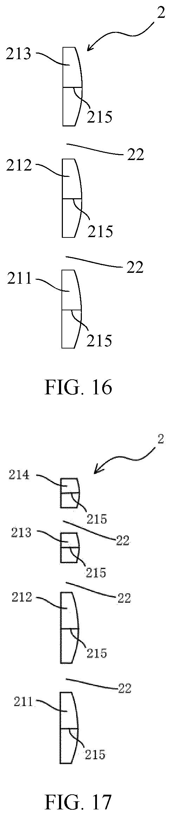

As shown in FIG. 16 and FIG. 17, the lens array 2 may be made of a whole piece of high-transparency material such as glass or resin, and a plurality of lenses 21 are formed on the material by using a technology such as precision molding, photoresist melting, and reactive ion beam etching. The shielding part 23 may be a shielding coating coated in the gap 22 between the two adjacent lenses 21 in the lens array 2, provided that the shielding coating can block the light ray.

In a specific embodiment, as shown in FIG. 6, diameters of the plurality of lenses 21 in the lens array 2 are the same. When the diameters of the plurality of lenses 21 in the lens array 2 are the same, in the plurality of lenses 21, spacings between any two adjacent lenses 21 are the same.

For example, in the specific embodiment shown in FIG. 6 and FIG. 16, the diameters of the plurality of lenses 21 in the lens array 2 are all 4 mm. According to the closely-packed lens array 2' in the existing structure shown in FIG. 4 with the same parameters as the lenses 21, diameters of a first lens 211', a second lens 212', a third lens 213', and a fourth lens 214' are all 4 mm. According to calculation by optical software, within a movement range of [-2 mm, 2 mm] of a human eye 5' on a human-eye plane 4', a length of an overlapping field-of-view area 8' between the first lens 211' and the second lens 212' is 1.2 mm, a length of an overlapping field-of-view area 8' between the second lens 212' and the third lens 213' is 1 mm, and a length of an overlapping field-of-view area 8' between the third lens 213' and the fourth lens 214' is 0.4 mm.

To ensure that field-of-view areas 7 covered by the lenses 21 on the display surface 11 in the embodiment of this application shown in FIG. 6 and FIG. 16 are independent of each other and do not overlap, the spacing between the two adjacent lenses 21 should be greater than or equal to a length of the overlapping field-of-view area 8' within the movement range when the two adjacent lenses 21 are closely connected. To be specific, a spacing between the first lens 211 and the second lens 212 should be greater than or equal to 1.2 mm, and a spacing between the second lens 212 and the third lens 213 should be greater than or equal to 1 mm. Therefore, in this embodiment of this application, the spacing between the two adjacent lenses 21 in the lens array 2 may be set to 1.5 mm. In other words, both the spacing between the first lens 211 and the second lens 212, and the spacing between the second lens 212 and the third lens 213 are 1.5 mm, so that spacings between optical axes 215 of the two adjacent lenses 21 are the same. Therefore, light rays in an optical path 6 are distributed more evenly, and the imaging effect is improved. In addition, overall consistency of the lens array 2 can be improved, manufacturing difficulty of the lens array 2 is reduced, manufacturing efficiency is improved, and manufacturing costs are reduced.

In this embodiment of this application, from imaging that is on the display and that is implemented when relative offsets between the human eye 5 along the human-eye plane 4 and the lens array 2 are 0 mm, -2 mm, and +2 mm and imaging on the display within a movement range of [-2 mm, 2 mm] of the human eye 5 on the human-eye plane 4 in FIG. 8 to FIG. 11, it can be learned that disposition in this embodiment of this application can expand the eye box range of the electronic device to [-2 mm, 2 mm]. In other words, within the movement range of [-2 mm, 2 mm] of the human eye 5 on the human-eye plane 4, field-of-view areas 7 covered by the first lens 211, the second lens 212, and the third lens 213 on the display surface 11 are all independent of each other and do not overlap, so that a field-of-view crosstalk problem is avoided during viewing of the user.

Certainly, the spacing between the two adjacent lenses 21 in the lens array 2 in this embodiment of this application may be 1.3 mm, 1.4 mm, 1.6 mm, or the like, or spacings between two adjacent lenses 21 in the lens array 2 may be different, provided that the spacing is greater than or equal to the length of the overlapping field-of-view area when the two adjacent lenses 21 are closely connected. This is not limited herein.

In addition, as shown in FIG. 6 and FIG. 16, when the diameters of the lenses 21 in the lens array 2 are the same, radii of curvature of the lenses may also be set to be the same, to further improve the overall consistency of the lens array 2, reduce the manufacturing difficulty of the lens array 2, improve the manufacturing efficiency, and reduce the manufacturing costs. Certainly, different radii of curvature may also be set. This is not limited herein.

In another specific embodiment, as shown in FIG. 7a, there are at least two lenses 21 with different diameters in the lens array 2. When there are at least two lenses 21 with different diameters in the lens array 2, there are at least two different spacings between the lenses 21 in the plurality of lenses 21.

In a specific embodiment shown in FIG. 7a, diameters of the first lens 211, the second lens 212, the third lens 213, and the fourth lens 214 are 4 mm, 4 mm, 1.5 mm, and 1.5 mm respectively. According to the closely-packed lens array 2' in the existing structure shown in FIG. 5 with the same parameters as the lenses 21, diameters of a first lens 211', a second lens 212', a third lens 213', and a fourth lens 214' are sequentially 4 mm, 4 mm, 1.5 mm, and 1.5 mm. According to calculation by optical software, within a movement range of [-2 mm, 2 mm] of a human eye 5' on a human-eye plane 4', a length of an overlapping field-of-view area 8' between the first lens 211' and the second lens 212' is 1 mm, a length of an overlapping field-of-view area 8' between the second lens 212' and the third lens 213' is 1 mm, and a length of an overlapping field-of-view area 8' between the third lens 213' and the fourth lens 214' is 0.8 mm.

To ensure that field-of-view areas 7 covered by the lenses 21 on the display surface 11 in the embodiment of this application shown in FIG. 7a and FIG. 17 are independent of each other and do not overlap, the spacing between the two adjacent lenses 21 should be greater than or equal to a length of the overlapping field-of-view area 8' within the movement range when the two adjacent lenses 21 are closely connected. To be specific, a spacing between the first lens 211 and the second lens 212 should be greater than or equal to 1 mm, a spacing between the second lens 212 and the third lens 213 should be greater than or equal to 1 mm, and a spacing between the third lens 213 and the fourth lens 214 should be greater than or equal to 0.8 mm. Therefore, in this embodiment of this application, the spacing between the first lens 211 and the second lens 212 may be 1.5 mm, the spacing between the second lens 212 and the third lens 213 may be 1.75 mm, and the spacing between the third lens 213 and the fourth lens 214 may be 1.5 mm.

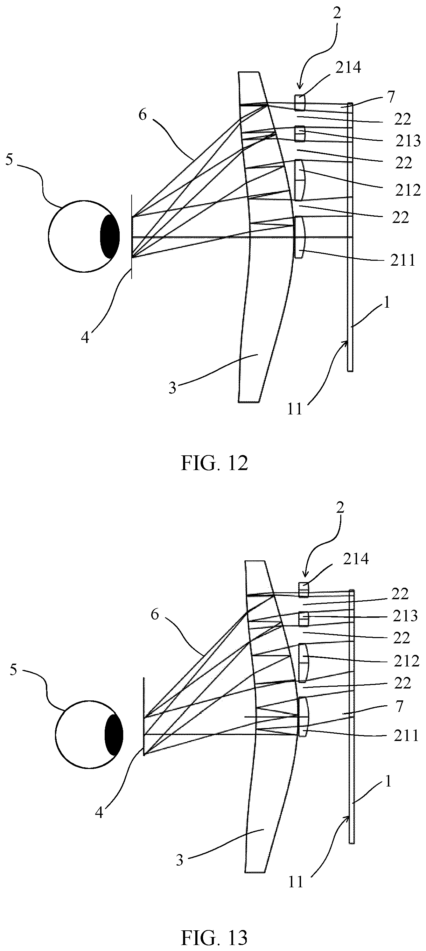

In this embodiment of this application, from imaging that is on the display and that is implemented when relative offsets between the human eye 5 along the human-eye plane 4 and the lens array 2 are 0 mm, -2 mm, and +2 mm and imaging on the display within a movement range of [-2 mm, 2 mm] of the human eye 5 on the human-eye plane 4 in FIG. 12 to FIG. 15, it can be learned that disposition in this embodiment of this application can expand the eye box range of the electronic device to [-2 mm, 2 mm]. In other words, within the movement range of [-2 mm, 2 mm] of the human eye 5 on the human-eye plane 4, field-of-view areas 7 covered by the first lens 211, the second lens 212, the third lens 213, and the fourth lens 214 on the display surface 11 are all independent of each other and do not overlap, so that a field-of-view crosstalk problem is avoided during viewing of the user.

In addition, when there are at least two lenses 21 with different diameters in the lens array 2, if the spacings between any two adjacent lenses 21 in the lens array 2 are the same, a spacing between a lens 21 with a small diameter and a lens 21 adjacent to the lens 21 may be excessively large. Consequently, pixel utilization on the display surface 11 is reduced, a partial field of view is lost, and the human eye 5 cannot view a picture. In addition, a size of the lens array 2 may be increased, which is not conducive to miniaturization of the lens array 2. Therefore, in the plurality of lenses 21, the spacing between the two adjacent lenses 21 may be set based on the specific length of the overlapping field-of-view area within the movement range when the two adjacent lenses 21 are closely connected.

As shown in the embodiment in FIG. 8, a position of the second lens 212 remains unchanged, and the second lens 212 has a maximum field of view ω_{2max_0}. As the third lens 213 moves in an edge direction, the spacing between the third lens 213 and the second lens 212 increases, and a minimum field of view ω_{3min_0} of the third lens 213 increases. When the maximum field of view of the second lens 212 is less than the minimum field of view of the third lens, that is, when ω_{2max_0} < ω_{3min_0}, a partial field of view may be lost. In this case, when the third lens 213 moves until the minimum field of view of the third lens 213 is equal to the maximum field of view of the second lens 212, that is, ω_{3min_0} = ω_{2max_0}, a spacing between the third lens 213 and the second lens 212 is a maximum spacing. In other words, to avoid the loss of the partial field of view caused by an excessively large spacing between the two adjacent lenses 21 in the lens array 2, in the direction from the center position of the lens array 2 to the edge of the lens array 2, it should be ensured that a maximum field of view ω_{Nmax_Shift} of an N^{th} lens 21 is greater than a minimum field of view ω_{(N+1)min_Shift} of an (N+1)^{th} lens 21 adjacent to the N^{th} lens 21, that is, ω_{Nmax_Shift} > ω_{(N+1)min_Shift}.

In this embodiment, there are at least two different spacings between the lenses 21, so that it can be ensured that the field-of-view areas 7 covered by the lenses 21 on the display surface 11 do not overlap, the pixel utilization on the display surface 11 is improved, and a loss of the field of view is avoided. In addition, a distance between an optical axis 215 of the lens 21 in the lens array 2 and an optical axis 215 of a lens 21 adjacent to the lens 21 can be prevented from being excessively large, which causes an increase in the size of the lens array 2. This facilitates a miniaturization design of the electronic device. Moreover, the distance between the optical axis 215 of the lens 21 in the lens array 2 and the optical axis 215 of the lens 21 adjacent to the lens 21 can also be prevented from being excessively small, so that light rays in an optical path 6 can be prevented from interfering with each other, the light rays in the optical path 6 are distributed more evenly, and the imaging definition is improved.

Certainly, when there are at least two lenses 21 with different diameters in the lens array 2, in the plurality of lenses 21, the spacings between any two adjacent lenses 21 may alternatively be set to be the same, provided that it is ensured that the spacing between the two adjacent lenses 21 should be greater than or equal to the length of the overlapping field-of-view area within the eye box range when the two adjacent lenses 21 are closely connected. This is not limited herein.

When lengths of the overlapping field-of-view areas when the lenses 21 are closely connected are the same, a spacing between the lens 21 and a lens 21 whose diameter is smaller than that of the lens 21 should be greater than a spacing between the lens 21 and a lens 21 whose diameter is larger than or the same as that of the lens 21, so that a distance between optical axes 215 of the two adjacent lenses 21 is not too large or too small. Therefore, the light rays in the optical path 6 are distributed more evenly, and imaging effect of a picture is improved.

For example, based on the existing structure shown in FIG. 5, during close connection, within a range [-2 mm, 2 mm] of the eye box range, the length of the overlapping field-of-view area 8' between the first lens 211' and the second lens 212' is 1 mm, and the length of the overlapping field-of-view area 8' between the second lens 212' and the third lens 213' is also 1 mm. However, a diameter of the third lens 213' is less than a diameter of the second lens 212', and a diameter of the first lens 211' is the same as the diameter of the second lens 212'. In this case, as shown in FIG. 7a and FIG. 17, the spacing between the second lens 212 and the third lens 213 in this embodiment of this application should be greater than the spacing between the second lens 212 and the first lens 211. For example, the spacing between the second lens 212 and the third lens 213 may be set to 1.75 mm, and the spacing between the second lens 212 and the first lens 211 may be set to 1.5 mm, so that a distance between an optical axis 215 of the second lens 212 and an optical axis 215 of the first lens 211 adjacent to the second lens 212 and a distance between the optical axis 215 of the second lens 212 and an optical axis 215 of the third lens 213 adjacent to the second lens 212 do not differ greatly, to improve consistency of the lens array 2. In addition, the distance between the optical axis 215 of the second lens 212 and the optical axis 215 of the third lens 213 is not excessively small, so that light rays are prevented from interfering with each other, the light rays in the optical path 6 are distributed more evenly, and an imaging clarity degree is improved.

Certainly, the spacings between the first lens 211 and the second lens 212, between the second lens 212 and the third lens 213, and between the third lens 213 and the fourth lens 214 in this embodiment of this application may alternatively be of another size that is greater than or equal to the length of the overlapping field-of-view area during close connected. This is not limited herein.

In some other embodiments, in the direction from the center position of the lens array 2 to the edge of the lens array 2, a diameter of a lens 21 at the edge is less than or equal to a diameter of a lens 21 at the center.

In a specific embodiment, as shown in FIG. 7a and FIG. 17, the lens 21 has the optical axis 215, and distances between an optical axis 215 of each of at least two lenses 21 and optical axes 215 of lenses adjacent to the lens 21 are different.

In this embodiment, as shown in FIG. 7a and FIG. 17, when there are at least two lenses 21 with different diameters in the lens array 2, diameters of two lenses 21 on two adjacent sides of the lens 21 are different, and distances between an optical axis 215 of the lens 21 and optical axes 215 of the two adjacent lenses 21 may be different, to ensure that the light rays in the optical path 6 are distributed evenly, and sizes of some gaps 22 in the lens array 2 can be reduced. Therefore, a quantity of lenses 21 in the lens array 2 is ensured, and a size of the lens array 2 is reduced. This facilitates a miniaturization design of the electronic device, and helps improve transmission efficiency of the lens array 2.

In a specific embodiment, as shown in FIG. 7a and FIG. 17, diameters of the lenses 21 gradually decrease in the direction from the center position of the lens array 2 to the edge of the lens array 2.

To ensure imaging effect of the lens array 2, a thickness at an edge of the lens array 2 should be within an appropriate range, and a thickness at an edge of each lens 21 should also be within an appropriate range. Therefore, a radius of curvature of the lens 21 cannot be excessively large, to prevent aberration caused by an excessively small thickness at the edge of the lens 21 from affecting an imaging clarity degree. When radii of curvature are the same, a thickness at an edge of a lens 21 with a smaller diameter is larger, that is, aberration is less likely to be generated.

In this embodiment, as shown in FIG. 7a and FIG. 17, in the lens array 2, for pictures in different field-of-view areas 7, lenses 21 with different diameters are used to perform imaging. To be specific, a diameter of the lens 21 at the edge of the lens array 2 is small, and a diameter of the lens 21 at the center position of the lens array 2 is large. This helps implement a smaller radius of curvature of the lens 21 at the edge of the lens array 2, to obtain larger focal power and improve imaging definition and viewing experience of the user.

In a specific embodiment, as shown in FIG. 7a and FIG. 17, in the plurality of lenses 21, at least two lenses 21 have different radii of curvature.

A smaller radius of curvature of the lens 21 indicates a larger bending degree of the lens 21, larger deformation at an edge of the lens 21, and a shorter focal length. On the contrary, a larger radius of curvature of the lens 21 indicates a smaller bending degree of the lens 21, smaller deformation at the edge of the lens 21, and a longer focal length. In the plurality of lenses 21, when at least two lenses 21 have different radii of curvature, the lens array 2 can perform imaging for pictures in different field-of-view areas 7 by using lenses with different focal lengths and different radii of curvature, so that light ray transmission effect of the lens array 2 can be improved, definition of a picture viewed by the human eye 5 can be improved, the electronic device has better imaging quality, and user experience effect is improved.

In the specific embodiment shown in FIG. 7a and FIG. 17, diameters of the first lens 211, the second lens 212, the third lens 213, and the fourth lens 214 are sequentially 4 mm, 4 mm, 1.5 mm, and 1.5 mm, radii of curvature of the first lens 211, the second lens 212, the third lens 213, and the fourth lens 214 are sequentially 5.6 mm, 4.5 mm, 4.2 mm, and 4.2 mm, and focal lengths of the first lens 211, the second lens 212, the third lens 213, and the fourth lens 214 are sequentially 11.4 mm, 9.1 mm, 8.7 mm, and 8.7 mm. The lens array 2 of this structure cooperates with the optical component 3, so that the pictures in different field-of-view areas 7 can be received by the human eye 5 in a more appropriate field of view. Therefore, picture quality and the user experience effect can be improved.

In a specific embodiment, as shown in FIG. 6 to FIG. 17, the plurality of lenses 21 are arranged in a centrosymmetric arrangement manner.

In this embodiment, the lens array 2 is of a centrosymmetric structure. This can simplify an analysis process of the lens array 2, reduce manufacturing difficulty, and reduce production and manufacturing costs. In addition, in consideration of a structure of the human eye 5, a range of the field-of-view area 7 covered by the lens 21 on the display surface 11 better matches a field of view of the human eye 5. Therefore, user experience effect is improved.

Certainly, in some other application scenarios, the lens array 2 may alternatively be configured as a non-centrosymmetric structure as required, to meet a requirement. This is not limited herein.

In addition, the lens array 2 may alternatively be configured as a single-sided array, a double-sided array, or the like as required. This is not limited herein.

In a specific embodiment, as shown in FIG. 6 to FIG. 17, the optical component 3 is of one of a foldable optical path structure, a diffractive element structure, a Fresnel lens structure, and an aspherical lens structure.

A sufficient distance should be reserved for focusing of a light ray. However, an excessively long focusing distance causes an excessively large size of the electronic device. In this embodiment, when the optical component 3 is of one of the foldable optical path structure, the diffractive element structure, the Fresnel lens structure, and the aspherical lens structure, the optical component 3 has good focusing and light convergence effect. Therefore, after a light ray emitted from the lens array 2 enters the optical component 3, an optical path 6 of the light ray can be changed, and the light ray in the optical path 6 can be converted into approximately parallel light to be incident to the human eye 5, so that a corresponding image can be formed in the human eye 5 and viewed by the human eye 5. In this way, imaging definition is improved, an imaging focal length of the electronic device is shortened, so that the electronic device can be lighter and thinner, costs are reduced, and a miniaturization design of the electronic device is facilitated.

Certainly, the optical component 3 may alternatively be of another optical structure having focusing effect. This is not limited herein.

In the specific embodiment shown in FIG. 6 to FIG. 17, the optical component 3 may be of the foldable optical path structure. This is simple in structure and easy to implement, has good focusing effect, can effectively shorten the imaging focal length of the electronic device, and can meet a focusing adjustment requirement.

In a specific embodiment, the lens 21 may be a spherical lens and/or an aspherical lens.

In this embodiment, the spherical lens has a small radius of curvature, a large bending degree of a surface, and a short focal length, so that a focal length of the electronic device can be reduced. However, when a diameter of the lens 21 is small, an excessively small radius of curvature causes a small thickness at an edge of the lens. This is not conducive to processing and manufacturing. A surface of the aspherical lens is more flat, so that an image can be corrected to reduce aberration, imaging definition can be improved, and beneficial impact resistance performance can be maintained. In addition, a lighter and thinner lens array 2 can be implemented, but costs are high. Therefore, the lens array 2 in this application may use spherical lenses with different diameters, focal lengths, and radii of curvature or a combination of aspherical lenses to perform imaging for pictures in different field-of-view areas 7 as required, to improve picture definition, improve strength of the lens array 2, and reduce costs.

It should be noted that lenses 21 of the lens array 2 in this application may be all spherical lenses or aspherical lenses, or may be a combination of the spherical lens and the aspherical lens. This is not limited herein.

In a specific embodiment, a diameter range of the lens 21 is [0.1 mm, 10 mm]. A range of a lens 21 spacing between any two adjacent lenses 21 is [0.1 mm, 10 mm]. A focal length range of the lens 21 is [1 mm, 1000 mm]. A range of a radius of curvature of the lens 21 is [1 mm, 1000 mm].

In this embodiment, the lens array 2 may use lenses 21 that have different diameters, focal lengths, and radii of curvature and that meet the foregoing ranges, and the spacing between two adjacent lenses 21 of the lens array 2 are adjusted, to ensure that field-of-view areas 7 covered by the lenses 21 on the display surface 11 are independent of each other and do not overlap, so that the electronic device can implement more eye box ranges and meet different use requirements.

In a process of configuring the spacing between the two adjacent lenses 21 in the lens array 2 in this embodiment of this application, a movement range of the human eye on the human-eye plane may be set to [-1 mm, 1 mm], [-3 mm, 3 mm], or the like according to an actual requirement in a process of calculating a lens array present when the two adjacent lenses 21 are closely connected in optical software, to obtain a length of an overlapping field-of-view area between the two adjacent lenses within the movement range such as [-1 mm, 1 mm] or [-3 mm, 3 mm] of the human eye on the human-eye plane. The spacing between the two adjacent lenses 21 is greater than or equal to the length of the overlapping field-of-view area within the movement range when the two adjacent lenses 21 are closely connected, so that the electronic device in this embodiment of this application can implement more eye box ranges, for example, eye box ranges of [-1 mm, 1 mm] and [-3 mm, 3 mm]. This is not limited herein.

Certainly, the diameter of the lens 21 in the lens array 2, the spacing between the two adjacent lenses 21, the focal length of the lens 21, the radius of curvature of the lens 21, and the like may alternatively be other values. This is not limited herein.

This application further provides an electronic device, including a display 1, an optical component 3, and the lens array 2 described in any one of the foregoing embodiments. The lens array 2 is disposed between the display 1 and the optical component 3. Because the lens array 2 has the foregoing technical effect, the electronic device including the lens array 2 should also have corresponding technical effect. Details are not described herein again.

It should be noted that a part of this patent application document includes copyright-protected content. A copyright owner reserves the copyright except copies made for the patent document or the recorded content of the patent document in the China National Intellectual Property Administration.

## Claims

1. A lens array, used in an electronic device, wherein the electronic device comprises a display and an optical component;
the display comprises a display surface, configured to display an image;
the lens array is disposed on a side of the display surface of the display, the lens array comprises a plurality of lenses, and there is a gap between any two adjacent lenses; and
the optical component is disposed on a side that is of the lens array and that is away from the display, and the optical component is configured to change a propagation path of a light ray incident through the lens array, so that the light ray is capable of being emitted into a human eye.

2. The lens array according to claim 1, wherein the lens array further comprises a shielding part, and the shielding part is disposed in the gap, to prevent a light ray emitted from the display surface from passing through the gap.

3. The lens array according to claim 1, wherein there are at least two different lens spacings between the plurality of lenses.

4. The lens array according to claim 1, wherein diameters of the lenses gradually decrease in a direction from a center position of the lens array to an edge of the lens array.

5. The lens array according to claim 1, wherein the lens has an optical axis, and distances between an optical axis of each of at least two lenses and optical axes of lenses adjacent to the lens are different.

6. The lens array according to claim 1, wherein at least two lenses in the plurality of lenses have different radii of curvature.

7. The lens array according to claim 1, wherein the plurality of lenses are arranged in a centrosymmetric arrangement manner.

8. The lens array according to any one of claims 1 to 7, wherein the optical component is of one of a foldable optical path structure, a diffractive element structure, a Fresnel lens structure, and an aspherical lens structure.

9. The lens array according to any one of claims 1 to 7, wherein the lens is at least one of a spherical lens or an aspherical lens.

10. The lens array according to any one of claims 1 to 7, wherein a diameter range of the lens is [0.1 mm, 10 mm];
a range of a lens spacing between any two adjacent lenses is [0.1 mm, 10 mm];
a focal length range of the lens is [1 mm, 1000 mm]; and
a range of a radius of curvature of the lens is [1 mm, 1000 mm].

11. An electronic device, comprising a display, an optical component, and the lens array according to any one of claims 1 to 10, wherein the lens array is disposed between the display and the optical component.
